# EUROPEAN PATENT APPLICATION

(11) **EP 4 440 106 A1**
(43) Date of publication of application: **02.10.2024**
(21) Application number: 23165076.3
(22) Date of filing: 29.03.2023
(51) Int. Cl.: H04N 19/12, H04N 19/132, H04N 19/136, H04N 19/167

(54) **FACILITATING REMOTE MEDICAL IMAGE RECONSTRUCTION**

(71) Applicant: Koninklijke Philips N.V., 5656 AG Eindhoven (NL)
(72) Inventor: GRASS, Michael, Eindhoven (NL); BERGNER, Frank, Eindhoven (NL); GOEDICKE, Andreas Georg, 5656AG Eindhoven (NL); SCHNELLBÄCHER, Nikolas David, Eindhoven (NL); CABALLERO JIMENEZ, Jose Maria, Eindhoven (NL); PEZZOTTI, Nicola, Eindhoven (NL)
(74) Representative: Philips Intellectual Property & Standards

(57) **Abstract**

Proposed concepts aim to provide schemes, solutions, concepts, designs, methods and systems pertaining to compressing raw medical image data. In particular, the raw medical image data is analysed in order to classify parts of said data into a plurality of classifications. Raw medical image data in a first classification is compressed in a weakly-lossy/lossless manner, and raw medical image data in a second classification is compressed in a strongly-lossy manner. In this way, a high overall compression rate may be achieved whilst maintaining an appropriate quality of the raw medical image data for reconstruction. In other words, a quality of the resultant reconstructed image may be ensured (i.e. by appropriately compressing parts of the raw medical image data), while enabling suitable compression rates for the transmission of the raw medical image data for remote reconstruction (i.e. by strongly compressing parts of the raw medical image data).

## Description

### FIELD OF THE INVENTION

The present invention relates to facilitating reconstruction of a medical image remotely, and more particularly to compressing raw medical image data for remote reconstruction of a medical image.

### BACKGROUND OF THE INVENTION

Scanning of anatomies (i.e. organs, areas of diagnostic interest, etc.) of a subject using imaging systems provides a commonly-used by powerful diagnostic tool for caregivers. Such imaging systems include, for example, include computed tomography (CT), magnetic resonance (MR), positron emission tomography (PET), and ultrasound (US) scanners. Producing a reconstruction of the image from raw medical image data acquired by said scanners is of high importance for accurate diagnosis, and therefore positive subject outcomes.

Recently, it has been realized that decoupling computationally expensive tasks (such as image reconstruction) from said imaging systems, and performing those tasks remotely provides numerous benefits. Indeed, a user of the imaging systems may have access to the latest processing software version, and a manufacturer of imaging systems may reduce the costs of hardware upgrades and reduce software obsolescence. With the increasing availability of cloud computing, this option has become ever-more viable

However, raw data sets acquired by imaging systems continue to grow in size as such systems improve. For example, current state-of-the-art CT raw data sets may be approximately 5-10 GB. Thus, there exist severe bandwidth issues when transferring raw medical image datasets for remote reconstructions (i.e. to the cloud).

### SUMMARY OF THE INVENTION

The invention is defined by the claims.

Proposed concepts aim to provide schemes, solutions, concepts, designs, methods and systems pertaining to compressing raw medical image data. In particular, the raw medical image data is analysed in order to classify parts of said data into a plurality of classifications. Raw medical image data in a first classification is compressed in a weakly-lossy/lossless manner, and raw medical image data in a second classification is compressed in a strongly-lossy manner. In this way, a high overall compression rate may be achieved whilst maintaining an appropriate quality of the raw medical image data for reconstruction. In other words, a quality of the resultant reconstructed image may be ensured (i.e. by appropriately compressing parts of the raw medical image data), while enabling suitable compression rates for the transmission of the raw medical image data for remote reconstruction (i.e. by strongly compressing parts of the raw medical image data).

According to examples in accordance with an aspect of the invention, there is provided a method of compressing raw medical image data for remote medical image reconstruction of an anatomy of a subject, the method comprising:
obtaining raw medical image data of a scan of the subject;
analyzing the raw medical image data to classify each part of the raw medical image data into one of a plurality of classifications;
processing, with a lossless compression algorithm or a weakly-lossy compression algorithm, raw medical image data in a first classification of the plurality of classifications to generate first compressed medical image data; and
processing, with a strongly-lossy compression algorithm, raw medical image data in a second classification of the plurality of classifications to generate second compressed medical image data.

Raw medical image data from a scanning session of a subject typically requires a significant amount of memory to store, and a large bandwidth to transmit. Accordingly, the size of the raw medical image data often makes it difficult to provide the raw medical image data to a system separate from the imaging/scanning device. This means that remote reconstruction of the raw medical image data (into a medical image) may be particularly burdensome.

It has been realized that, by classifying different parts of raw medical image data into a plurality of classifications, higher compression rates for the raw medical image data may be achieved without reducing a diagnostic quality of a medical image reconstructed from the compressed data.

Some parts of the raw medical image data may not contribute, or may not strongly contribute, toward reconstruction of an anatomy of interest. For example, parts of the raw medical image data may have duplicate/redundant parts, may correspond to an area/anatomy that is not of interest, or may not contain any information related to the subject at all. Conversely, other parts of the raw medical image data may be key for the effective reconstruction of the medical image. Thus, embodiments of the invention are based on the realization that parts of the raw medical image data may be compressed at a higher (i.e. a strongly-lossy) rate, thus greatly compressing the raw medical image data without greatly impacting the quality of the raw medical image data. Of course, this also means that parts of the raw medical image data may be compressed lower (i.e. weakly-lossy) rate, or even a lossless rate, to assure quality of the raw medical image data for diagnostic purposes. Therefore, by classifying parts of the raw medical image data differently, the raw medical image data may be compressed at high rates whilst ensuring resultant medical image integrity.

In other words, the raw medical image is categorized/grouped/classified into a plurality of classifications. Some of the raw medical image data is classified into a first classification, some into a second classification, and there may also (optionally) be raw medical image data classified into further classifications and/or sub-classifications. The raw medical image data in the first classification is weakly or losslessly compressed by an appropriate algorithm, while raw medical image data in the second classification is strongly compressed. The resultant compressed raw medical image data may then be stored for future reconstruction of the medical image (after decompression), or may be transmitted to a remote location (i.e. the cloud) for remote medical image reconstruction (after decompression).

In some embodiments, analyzing the raw medical image data may comprise: identifying a part of the raw medical image data that does not contribute toward a reconstruction of the anatomy of the subject; and classifying the identified part of the raw medical image data into the second classification.

Put another way, some of the raw medical image data may not (strongly) contribute toward a reconstruction of an anatomy (i.e. a structure/part of a structure) of a subject. Therefore, this raw medical image data may not be important for reconstructing the anatomy of interest within the scan. So, by identifying such raw medical image data, said data can be classified/grouped/categorized into the second classification, meaning that this data is strongly compressed. This reduces the overall size of the raw medical image data, whilst not impacting the quality of the resultant medical image data, at least in the region of the anatomy of the subject that is of particular interest.

In some cases, identifying the part of the raw medical image data that does not contribute toward reconstruction may comprise identifying raw medical image data having another similar part within the raw medical image data.

In the case of many medical image scanners/imaging devices, there can exist a lot of redundancy. For example, this may be due to particular locations/structure being scanned by more than one at the same time. Alternatively, a same location/structure may be scanned many times, with only a handful of required (or well imaged) iterations. In this case, raw medical image data that has a duplicate within the data set (or that simply has a high degree of similarity) may be classified such that it is strongly compressed, while not sacrificing ultimate medical image quality.

By way of specific example, the scan of the subject may be an axial CT scan, a helical CT scan, or a cardiac gating CT scan.

Some specific cases where there may exist raw medical image data with similar counterparts (or even duplicates) in the same dataset include raw medical image data from an axial CT scan (i.e. with pitch equal to 0), a helical CT scan (i.e. with pitch not equal to 0), or a cardiac gating CT scan. For an axial CT scan, the raw medical image data may comprise may parts corresponding to the middle of the detector, and are therefore similar. For a helical CT scan, similar raw medical image data may be repeated at shifted positions (i.e. Pi-partners). For a cardiac gating, parts of the raw medical image data may correspond to the same, motionless structure, at different time points, and therefore may be similar.

In some embodiments, identifying the part of the raw medical image data that does not contribute toward reconstruction may comprise identifying raw medical image data having a near-zero value.

Thus, raw medical image data that does not contain any information of note (i.e. null/near zero values) may be strongly compressed. Such data may be of empty space/an area surrounding the subject, and therefore does not need to be losslessly/weakly-lossy compressed. Indeed, losing some of this data in a compression process is highly unlikely to result in a loss of diagnostic quality of a resultant medical image obtainable from the compressed raw medical image data.

In this case, when the raw medical image data is of a CT scan, the near-zero value may correspond to a zero-line integral.

One specific case where near-zero values amongst the raw medical image data may be identified are zero-line integrals in CT scans. These may be quickly and efficiently extracted from the raw medical image data.

Further, identifying the part of the raw medical image data that does not contribute toward reconstruction may comprise identifying raw medical image data corresponding to an apparatus used to acquire the scan of the subject.

By way of explanation, it may often be the case that the medical imaging device/scanner may image a part of the device itself. This, of course, is not particularly useful for diagnostic purposes, and therefore may be strongly compressed without unduly sacrificing raw medical image data quality.

In this case, identifying the raw medical image data corresponding to the apparatus may be based on a model representing the apparatus.

An apparatus within the raw medical image data may be straightforward, as a model indicative of the apparatus within the raw medical image device may be used to identify parts of the raw medical image data corresponding to the apparatus in a straightforward manner. Accordingly, raw medical image data may be categorized in an efficient manner.

In some embodiments, the method may further comprise obtaining a reconstruction request describing parameters of reconstruction of the raw medical image data, and analyzing the raw medical image data is further based on the reconstruction request.

The parameters of reconstruction of the raw medical image data may also impact the way in which the raw medical image data should be classified for respective compression. Thus, more appropriate compression may be improved by basing the classification on this information.

Furthermore, the reconstruction request may comprise a reconstruction field of view describing a region of the raw medical image data to be reconstructed. In such a case, analyzing the raw medical image data may comprise: identifying reconstruction parts of the raw medical image data corresponding to the reconstruction field of view; classifying the identified reconstruction parts into the first classification; and classifying raw medical image data corresponding to an area surrounding the reconstruction parts into the second classification.

As part of the reconstruction request, there may include a reconstruction field of view (e.g. a user-selected field of view). This may include a particular area of the subject to be reconstructed, or a particular region within the scanner to be focused on. In this case, any raw medical image data corresponding to an area outside this field of view may be compressed to a higher degree than those within the field of view.

In some embodiments, the method may further comprise obtaining an indication of the anatomy of the subject to be reconstructed. Accordingly, analyzing the raw medical image data may comprise: identifying anatomical parts of the raw medical image data corresponding to the anatomy to be reconstructed; classifying the identified anatomical parts into the first classification; and classifying raw medical image data corresponding to an area surrounding the anatomical parts into the second classification.

In some cases, a user may specify the specific anatomy (i.e. structure/sub-structure) of interest to be reconstructed. Therefore, to appropriately classify the raw medical image data, data corresponding to the anatomy of interest is placed into the first classification, whilst data not corresponding to the anatomy of interest is placed into the second classification.

Specific embodiments may provide that each of the lossless compression algorithm, the weakly-lossy compression algorithm and the strongly-lossy compression algorithm are one of compression algorithms are machine-learning based compression algorithms.

Machine-learning based compression algorithms offer an effective means for compression, meaning high compression rates for low levels of loss.

Further, it may be the case that each of the lossless compression algorithm, the weakly-lossy compression algorithm and the strongly-lossy compression algorithm correspond to the same compression algorithm with different compression rates.

Thus, a simplified, standardized scheme for compression may be provided, negating the need for many different kinds of compression algorithms.

In some embodiments, the method may further comprise deleting raw medical image data in a third classification of the plurality of classifications.

In addition to the above, some of the raw medical image data may be deleted rather than compressed. Thus, less storage and lower bandwidths are required for storing and transmitting the compressed raw medical image data. Indeed, some of the raw medical image data may have absolutely no impact on the reconstruction of the anatomy of interest of the subject. Thus, deleting this data may have no impact on the diagnostic quality of the medical image resulting from the ultimate decompressed raw medical image data.

According to other examples in accordance with an aspect of the invention there is provided a computer program comprising computer program code means adapted, when said computer program is run on a computer, to implement a method of compressing raw medical image data for remote medical image reconstruction of an anatomy of a subject.

According to further examples in accordance with an aspect of the invention there is provided a system for compressing raw medical image data for remote medical image reconstruction of an anatomy of a subject, the system comprising:
an interface configured to obtain raw medical image data of a scan of a subject;
a classifier configured to analyze the raw medical image data to classify each part of the raw medical image data into one of a plurality of classifications;
a compression module configured to:
   process, with a lossless compression algorithm or a weakly-lossy compression algorithm, raw medical image data in a first classification of the plurality of classifications to generate first compressed medical image data; and
   process, with a strongly-lossy compression algorithm, raw medical image data in a second classification of the plurality of classifications to generate second compressed medical image data.

These and other aspects of the invention will be apparent from and elucidated with reference to the embodiments described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 is a flow diagram of a method of compressing raw medical image data for remote medical image reconstruction of an anatomy of a subject according to an embodiment of the invention;
Fig. 2 is a flow diagram of a method for analyzing the raw medical image data according to an aspect of an embodiment of the invention;
Fig. 3 is a flow diagram of a method for analyzing the raw medical image data according to an aspect of another embodiment of the invention;
Fig. 4 is a flow diagram of a method for analyzing the raw medical image data according to an aspect of a further embodiment of the invention;
Fig. 5 is a simplified block diagram of a system for compressing raw medical image data for remote medical image reconstruction of an anatomy of a subject according to an embodiment of the invention; and
Fig. 6 is a simplified block diagram of a computer within which one or more parts of an embodiment may be employed.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. The mere fact that certain measures are recited in mutually different dependent claims does not indicate that a combination of these measures cannot be used to advantage.

It should also be understood that the Figures are merely schematic and are not drawn to scale. It should also be understood that the same reference numerals are used throughout the Figures to indicate the same or similar parts.

Typical raw medical image datasets (i.e. data from a CT/MR scanning session of a subject) are very large. Said datasets require large amounts of storage, and also large bandwidths to be able to transmit in an acceptable amount of time. This is becoming increasingly problematic as image acquisition devices become more advanced, meaning that acquired datasets are larger (and have associated image quality advantages).

Proposed concepts aim to overcome the above problem, by providing a means for compressing raw medical image data, such that transfer of the dataset for remote image reconstruction is facilitated. Remote (i.e. separate from the acquisition device) image reconstruction may be beneficial for many reasons, such as enabling access to the latest reconstruction software version, and reducing the costs of hardware upgrades and reduce software obsolescence (i.e. there may be no need to individually upgrade/update software and hardware on each scanning device). Indeed, remote reconstruction in the cloud provides many benefits to users, including increased efficiency, lower costs, and greater effectiveness of the application.

On the one hand, compressing data at a high compression rate (i.e. strongly-lossy compression) leads to a much smaller dataset. On the other hand, this reduces a quality of the data. As will be readily appreciated, degradation of medical image data should be avoided to the extent that diagnostic decisions may be impacted. However, high compression rates are desirable with medical facilities becoming increasingly connected and data-reliant.

Moreover, compressing data at a low compression rate (i.e. lossless, or weakly-lossy compression) preserves quality of the data. Unfortunately, the compression rates offered by such schemes may not be sufficient to facilitate the communication of large data sets over networks of medical facilities.

In the present invention, individual raw medical image datasets are analysed in order to classify/categorise parts of the data into a plurality of classifications. Each of the plurality of classifications may undergo different compression schemes (i.e. the parts of the raw medical image data in the different classifications may be compressed at different rates). At the very least, parts of the raw medical image data are segmented into either a first or a second classification. Data in the first classification is subject to a lossless (or weakly-lossy) compression scheme, thus preserving data quality. Data in the second classification is subject to a strongly-lossy compression scheme, thus greatly reducing a size of the data.

Of course, the raw medical image data may be classified/categorized/grouped into a number of other different classifications or sub-classifications. In one embodiment, there may be provided a third classification. Raw medical image data in the third classification may be deleted/dropped, or may simply be omitted from transmission (i.e. not transmitted for remote reconstruction). Furthermore, additional classifications may be provided, within which raw medical image data may be subject to a variety of different compression schemes/rates.

Overall, the raw medical image data is analysed so as to classify/categorize/group the raw medical image data into a plurality of classifications. The classification that parts of the raw medical image data are placed into may be based on a degree to which the part of said raw medical image data influences a medical image that may be reconstructed from the raw medical image data. For example, parts of raw medical image data that strongly contributes to the reconstruction of the medical image may be classified into the first classification, while parts of raw medical image data that weakly (compared to other parts of the raw medical image data) contributes to reconstruction of the medical image data (or not at all), may be classified into the second classification.

In other words, the invention may provide the advantage that raw medical image data sets undergo a higher compression rate. Indeed, this may be achieved whilst ensuring high quality of the raw medical image data set, by selective lossy compression of parts the raw medical image data. Thus, transferring of large raw medical image data sets to remote systems (i.e. the cloud) can be facilitated - for remote medical image reconstruction.

Exemplary embodiments of the invention aim to strongly compress parts of raw medical image data that do not "strongly" contribute to the reconstruction of a medical image. More particularly, raw medical image data that is not (particularly) useful for reconstructing a part of the medical image corresponding to an anatomy/pathology/structure of interest of the subject (i.e. has no substantial impact on the reconstruction of the structure of diagnostic interest) is strongly compressed.

It should be appreciated that, although certain parts of the raw medical image data may not directly contribute to the reconstruction of the diagnostically relevant part of the medical image (i.e. data having a near-zero/null values, data corresponding to artefacts, etc.), this information is still needed as a filter is applied across the detector during reconstruction. Thus, it is not always appropriate to simply delete/drop such data (or omit it from transmission for remote reconstruction). Instead, embodiments of the invention categorise such data to strongly compress the data, as the quality of the data is not a key determining factor for the quality of the resultant medical image derived from the uncompressed raw medical image data.

The invention may make use of acquisition, reconstruction, and/or application constraints in the raw medical image data (and associated imaging process) to ensure effective lossless and lossy compression of the raw medical image data. Put another way, a core concept of embodiments of the invention is to use domain knowledge (of the acquisition, reconstruction, or application specific process) to make the compression of parts of the raw medical image data adaptive based on additional information and/or constraints. Of course, the invention may make use of traditional compression methods (e.g. JPEG), or state-of-the-art neural-network compression techniques.

By way of example, embodiments of the invention may take one or more of the following information/factors into account when determining an appropriate compression scheme for parts of the raw medical image data:
(i) Acquisition restraints, such as:
   (a) Near-zero/zero data. In raw CT data sets, after conversion from the photon to the line integral domain (and when the patient is smaller than the reconstruction field-of-view), raw medical image data corresponding to the outer part of the detector/scanner contains zero line-integrals. Thus, the raw medical image data may be separated into two regions - one with zero line-integrals, and one with non-zero line-integrals. For example, the region with zero line-integrals can be detected in a straightforward manner using a thresholding/region growing operation. The part of the raw medical data in this region may be classified such that it is either not transferred at all, or a strongly-lossy compression is applied. Conversely, a central region with non-zero line-integrals is classified such that it is either compressed losslessly or weakly-lossy (i.e. with a smaller compression rate).
   (b) Redundant data. By identifying data that is redundant for the purpose of reconstruction of the medical image, an appropriate compression scheme may be applied. By way of example, this may occur when raw medical image data is acquired from a CT axial CT scan, a helical CT scan, or a cardiac gating CT scan. Such redundant data may be classified such that it is omitted from transfer (i.e. deleted, or stored elsewhere) or is strongly compressed, while compressing the remaining data weakly-lossy or lossless. In the case of cardiac triggered scans (i.e. cardiac gating CT scan) with phase safety, the real heartbeat length may be checked after acquisition, and only the best/optimal set of raw medical image data (i.e. the raw medical image data best aligning with the desired.

Of course, redundancy in data acquisition is not only present for CT scanning. By way of further example. In MRI, a partial Fourier allows the subsampling of high frequencies by exploiting the conjugate symmetry of k-space. In this case, the raw medical image data corresponding to said subsamples may be considered redundant (but still potentially useful) and therefore may be classified such that those parts are strongly compressed. Furthermore, in parallel MR acquisition different coil images also share similar information (these are typically compressed from ~10-13 coils to fewer coefficients). In some cases, instead of placing all of these parts of the medical image data in the same classification (and therefore the same/similar compression rates), they may be classified such that an increasingly stronger compression is applied to the least relevant parts.

Finally, in helical CT scans, there are typically parts of the raw medical image data corresponding to areas shadowed by the eclipse collimator at the beginning and the end of a helical scan. These parts of the raw medical image data may also be classified such that they are entirely omitted, or strongly compressed.

(ii) Reconstruction constraints. Usually, before a scan is started, there is provided a reconstruction request, containing with reconstruction parameters such as a (geometric) field-of-view. These parameters may define options that may be used to categorize raw medical image data resulting from the scan, such that the compression of the raw medical image data may be improved (i.e. higher compression rate, improved image quality), prior to sending the raw medical image data remotely (i.e. to the cloud). This may include:
(a) Data outside of the field-of-view. Defining a reconstruction field-of-view means that only a part of the raw medical image data (projection) is used in the reconstruction process directly, while the rest of the raw medical image data (projection) contributes only to a filtering process, prior to back projection. Similar to the above, these two parts of the raw medical image data can be determined and classified differently for appropriate compression.
(b) A chosen reconstruction filter and image resolution. Since lossy compression mostly acts on noise and/or small details in the images, if the reconstruction request specifies that coarse images are to be reconstructed, and/or smooth reconstruction filters are to be used, this offers the opportunity to use lossy compression of higher strength for parts of the raw medical image data.

(iii) Application constraints. When a scan is ordered there is usually a request to visualize a certain anatomy or pathology (i.e. a structure or sub-structure) in the patient. Once the scan order is available, it is obvious that certain parts of the raw medical image data are only acquired since they surround the scan target (i.e. the anatomy/pathology). Raw medical image data may be subdivided into relevant and non-relevant parts based on this initial scan request by the user, classified, and compressed accordingly.

(iv) Device constraints. During a scanning process, it is often the case that the volumes imaged by the device contain parts of the device itself (e.g. a table). Parts of the raw medical image data corresponding to these parts of the device can be identified by comparison to a model describing a pattern of raw medial image data corresponding to the device. It may also be useful to obtain a limited set of parameters describing the position and potential deformation of the part (i.e. bending due to the patient lying on a table).

In some of the above applications, it may be the case that the classification of parts of the raw medical image data such that they are omitted from transmission or deleted leads to truncated projections or a volume-of-interest-imaging problem. The subsequent projection filtering for the filtered-back projection reconstruction could result in strong artefacts, and shifts in the quantitative Hounsfield levels in the image. Accordingly, in some embodiments the compression scheme may be aware of this additional effect, by either truncating and compressing a filtered version of the raw medical image data, or compressing and transmitting parts of the raw medical image data from outside the truncated parts that are needed to compensate for the filtration errors.

Of course, it should be appreciated that the invention may be used to compress raw medical image data from many types of medical imaging modalities, such as conventional CT, spectral CT, dark field CT, C-arm CT, tomosynthesis X-ray imaging, PET, SPECT, US, or MR. The skilled person would appreciate alternative raw medical imaging data to which the invention would be applied, and the minor modifications that would need to be required to implement the invention on such different types of data.

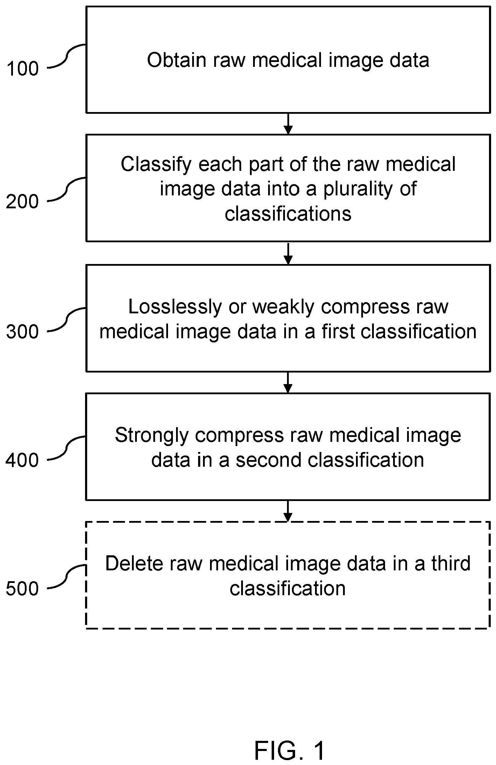

By way of illustrative example, Fig. 1 is a flow diagram of a method of compressing raw medical image data for remote medical image reconstruction of an anatomy of a subject according to an embodiment of the invention.

Raw medical image data is data acquired from a medical device (such as a CT machine, MRI machine, PET machine, etc.) without undergoing post-processing to the point that a medical image can be displayed. In other words, raw medical image data is data acquired from a medical device/scanner prior to reconstruction to produce a medical image.

Reconstruction (i.e. of CT image data, MR image data, etc.) to produce a medical image for viewing by a caregiver/medical professional/another user is a computationally intensive task. Furthermore, techniques and software for performing reconstruction is a computationally heavy task. Therefore, performing this task remote from the medical device/scanner itself may enable several advantages, as outlined previously. Embodiments of the invention aim to facilitate this remote image reconstruction.

The anatomy/pathology of the subject may be any structure, sub-structure, etc. of the subject that may be of interest (i.e. for diagnostic purposes).

Firstly, at step 100, raw medical image data of a scan of a subject is obtained. This may be obtained/acquired directly from a medical device/scanner performing the scan (i.e. in real-time or shortly after scan session completion). Alternatively, the raw medical image data may be obtained/retrieved from storage, such as from a database or other data repository.

At step 200, the raw medical image data is analyzed in order to classify/categorize/group each part of the raw medical image data into one of a plurality of classifications. In other words, the raw medical image data is processed in order to identify parts of the raw medical image data to be classified into a classification. There are at least two, but may be more, classifications for the raw medical image data.

In some cases, the raw medical image data may be analyzed in order to determine a degree/level to which parts of the raw medical image data impact reconstruction of the medical image (or part thereof corresponding to the anatomy of the subject). For example, parts of the raw medical image data that greatly/strongly impact the quality of the reconstruction of the medical image may be classified into the first classification, while parts of the raw medical image data that weakly impact (or do not impact) the quality of the reconstruction of the medical image may be classified into the second classification.

By way of specific example, a simple way to analyse the raw medical image data is to reconstruct a first coarse (i.e. low resolution), small image from all of the raw medical image data. A virtual dataset may then be calculated, and then removed from the raw medical image data by subtraction. In other words, the raw medical image data may be analysed indirectly via an image space, which provides a straightforward mechanism for identifying redundant data.

Put another way, a medical image may be reconstructed using the raw medical image data, including the raw medical image data useful for reconstruction. Raw medical image data that did not (strongly) contribute to the reconstruction phase, can then be identified and classified for strong compression.

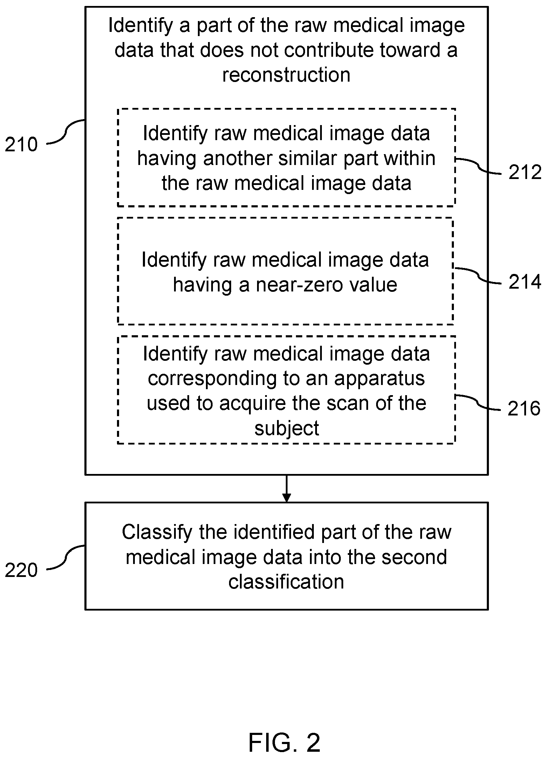

More specific examples of potential methods for analyzing the raw medical image data so as to classify parts of the raw medical image data into a plurality of classifications will be described in more detail in relation to Figs 2-4.

At step 300, raw medical image data in a first classification of the plurality of classifications is processed to generate first compressed medical image data. This processing is performed by a lossless compression algorithm or a weakly-lossy compression algorithm.

Put another way, the raw medical image data classified into the first classification is weakly compressed (i.e. at a low compression rate). This may mean that the first compressed medical image data may not have any (or little) data degradation. Effectively, this means that when the first compressed medical image data is decompressed, it may be substantially the same as the raw medical image data before compression.

Thus, the raw medical image data in the first classification may be parts of the raw medical image data that has a large impact on reconstruction of the medical image (i.e. it has no/little redundancy within the dataset, corresponds to the anatomy of interest, etc.).

At step 400, raw medical image data in a second classification of the plurality of classifications is processed to generate second compressed medical image data. This processing is performed by a strongly-lossy compression algorithm.

In other words, the raw medical image data classified into the second classification is strongly compressed (i.e. at a high compression rate). This may mean that the first compressed medical image data is compressed to a high degree, requiring less space to store and a lower bandwidth to transmit. Effectively, this means that when the second compressed medical image data is decompressed, it may have suffered a degree of degradation compared to the raw medical image data before compression.

However, the raw medical image data in the second classification may be parts of the raw medical image data that has a little/no impact on reconstruction of the medical image, especially when compared to the raw medical image data in the first classification (i.e. there is redundancy within the dataset, corresponds to a different anatomy/object that is not an anatomy of interest, has a null or near-zero value etc.).

To clarify, the lossless compression algorithm compresses the raw medical image data in the first classification, such that no data is lost by compression. The weakly-lossy compression algorithm compressed the raw medical image data in the first classification such that substantially no/minimal amounts of data are lost. Essentially, these algorithms are configured to compress the data while maintaining a high degree of image quality.

Contrastingly, the strongly-lossy compression algorithm compresses the raw medical image data to a high degree, such that the second compressed medical image data is small. Essentially, the strongly-lossy compression algorithm is configured to heavily compress the data, potentially slightly reducing the quality of the data, but the raw medical image data within the second classification should be selected such that this does not greatly impact the image quality.

In some embodiments, each of the lossless compression algorithm, the weakly-lossy compression algorithm and the strongly-lossy compression algorithm are machine-learning based compression algorithms. Alternatively, the compression algorithms may be traditional compression algorithms. The skilled person would appreciate appropriate compression algorithms that may be used for each purpose.

In further embodiments, each of the lossless compression algorithm, the weakly-lossy compression algorithm and the strongly-lossy compression algorithm correspond to the same compression algorithm with different compression rates. Indeed, many compression algorithms are capable of being lossless, or strongly-lossy dependent on a selectable compression rate.

Of course, it should be appreciated that many other (optional) classifications for the raw medical image data may be implemented.

For example, in (optional) step 500, raw medical image data in a third classification of the plurality of classifications is deleted, dropped or removed. Effectively, data in the third classification is classified such that it may be omitted entirely from transmission for remote medical image reconstruction.

Indeed, raw medical image data in the third classification may have no impact on the reconstruction of the medical image whatsoever (or at least very little impact). For example, the raw medical image data in the third classification may have a very high degree of redundancy.

Furthermore, other (optional) classifications may be implemented. It may be beneficial for further classifications of the raw medical image data, for data that is neither key for medical image reconstruction (such as medical image data in the first classification) nor that can be assumed to have a negligible impact on medical image reconstruction (such as medical image data in the second/third classifications. In this case, raw medical image data in the further classifications may be compressed at a rate implemented by the weakly and strongly lossy compression algorithms. Thus, a staggered approach to raw medical image data compression may be taken, with increasing compression rates for decreasing data importance in the context of image reconstruction.

Although not shown, the method may then comprise steps of storing and/or transmitting the first and second compressed medical image data. The compressed data may be stored for future transmission for remote reconstruction of the image, or may be immediately transmitted remotely for processing. The compressed data may be transmitted to the cloud, or any other processor suitable for remote image reconstruction.

Furthermore, the method may also comprise steps of decompressing the first and second compressed medical image data. This may be performed by known decompression methods appreciated by the skilled person. The decompressed raw medical image data may then be used in a known reconstruction process for generating a final medical image.

Moving on, Figs 2-4 present flow diagrams of methods for analyzing the raw medical image data in order to appropriately classify the raw medical image data into one or more of a plurality of classifications. One or more of the methods of Figs 2-4 may be incorporated as step 200 of the method descried in relation to Fig. 1. Of course, alternative methods would be appreciated by the skilled person.

Firstly, Fig. 2 relates to the identification of raw medical image data that does not contribute (or does not strongly contribute) toward a (potential) reconstruction of a medical image from the raw medical image data. Such identified data may be appropriate for classifying into the second classification, or at the very least a classification that is subsequently compressed at a high rate.

At step 210, a part (or multiple parts) of the raw medical image data that does not (strongly) contribute toward a reconstruction of the anatomy of the subject is identified. In other words, parts of the raw medical image data that are not of relative importance (compared to other parts of the raw medical image data) are identified.

To clarify, raw medical image data which when undergoing lossy compression, does not have a noticeable impact on the quality of a reconstructed medical image, may be considered to not (strongly) contribute to the reconstruction of the anatomy of the subject.

In some embodiments, step 210 comprises one or more of optional sub-steps 212, 214 and 216.

At sub-step 212, raw medical image data having another similar part within the raw medical image data is identified. Essentially, this means that raw medical image data that is redundant (i.e. has duplicates, or parts with a high degree of similarity) is identified.

In particular, certain imaging/scanning modalities may benefit greatly from identification of redundant data for strong compression, as there may be a large volume of redundant data. Such circumstances will be clear to the skilled person. CT scanning is a particular form (although not the only form) where redundancy is particularly prevalent. For example:
(i) In an axial CT scan (i.e. with pitch = 0) there are similar rays in the middle of the detector when the tube/detector is rotated by 180°. These similar rays may result in similar raw medical image data, meaning that there may be repeats of the same/similar medical image data. Thus, the raw medical image data corresponding to rays in the middle of the detector may be strongly compressed without noticeably impacting ultimate image quality. Of course, outside the central plane the rays become increasingly dissimilar, and therefore not all of the data may be considered redundant.
(ii) In a helical CT scan (i.e. with pitch ≠ 0) there are similar rays in multiple at different shifted positions, depending on the specific pitch. These are called PI-partners, and give rise to repeated raw medical image data. Once a PI-partner is identified, at least one part of the raw medical image data relating to the partner may be strongly compressed without sacrificing image quality.
(iii) In all CT scans, rays on the detector or from adjacent angular views might also share low-frequent information. This is because the projection does not change rapidly when rotating the tube/detector slightly. This may also give rise to repeated/similar raw medical image data.
(iv) In a cardiac gating CT scan, the rays may go through the same volume/location at different phases/time-points (i.e. when the heart is at different points within a heart-beat cycle), and so may not be considered similar. However, other rays go through motionless body parts at different phases/time points, and therefore measure redundant information/produce repeated raw medical image data.

At step 214, raw medical image data having a near-zero value is identified as data that does not (strongly) contribute toward a reconstruction.

In other words, raw medical image data having a substantially null value are identified amongst the raw medical mage data. Indeed, such near-zero data may correspond to areas of the detector within which nothing (but air) is present (i.e. an area surrounding the subject). Whilst this data is likely to have a null/zero value, there is always the possibility for small random fluctuations, and therefore may have a very small (or near-zero) value instead.

By way of specific example, when the raw medical image data is of a CT scan, the near-zero value corresponds to a zero-line integral. The skilled person is very familiar with methods for identification of zero-line integrals, and indeed any near-zero value in raw medical image datasets.

At step 216, raw medical image data corresponding to an apparatus used to acquire the scan of the subject is identified. Such data is identified as the part of the raw medical image data that does not (strongly) contribute toward reconstruction.

Such raw medical image data is associated with the scanner/medical device itself (e.g. a table, a handle, the scanner itself). This means that the raw medical image data does not correspond to the subject being scanned, and therefore is not useful for reconstructing parts of the image that is useful for diagnostic purposes.

In some embodiments, identifying the raw medical image data corresponding to the apparatus is based on a model representing the apparatus. Indeed, the footprint within the raw medical data corresponding to an apparatus may be predictable, and therefore may follow a (relatively) simple model, useful for quick and efficient identification of such data. In some cases the model may account for deformations/alterations due to the presence of the subject (e.g. the table bending under weight of the subject).

Finally, at step 220, the identified part (or parts) of the raw medical image data is (or are) classified into the second classification. Thus, the identified parts are processed by a strongly-lossy compression algorithm to generate second compressed medical image data.

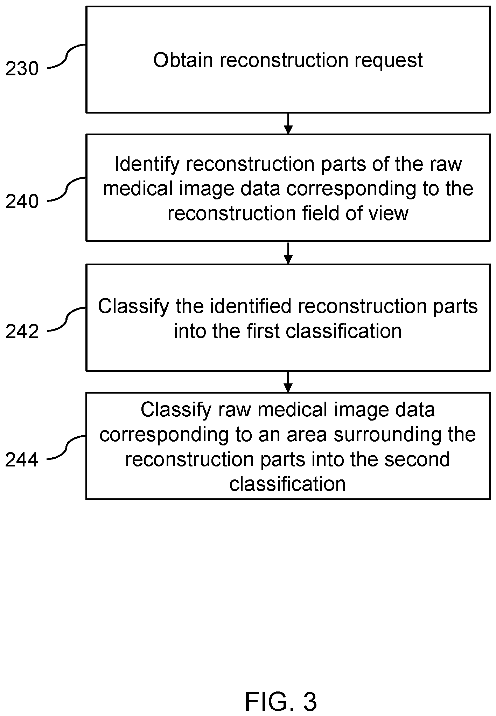

Fig. 3 is a flow diagram of a method for analyzing the raw medical image data according to an aspect of another embodiment of the invention.

At step 230, a reconstruction request describing parameters of reconstruction of the raw medical image data is obtained. This may be obtained/acquired directly from a user, or may be interpreted from standard reconstruction settings and optionally modifications thereof.

The reconstruction request may obtain various reconstruction parameters, such as a target resolution, a target field of view, and filters to be used. All of these parameters may be useful for analysing the raw medical image data to identify relevant/irrelevant raw medical image data for the reconstruction.

Steps 240-244 present a method that may be employed when the reconstruction request comprises a reconstruction field of view parameter value (describing a region of the raw medical image data to be reconstructed).

Specifically, at step 240, reconstruction parts of the raw medical image data corresponding to the reconstruction field of view are identified. Put another way, a user may specify a field of view to be reconstructed, which may only correspond to a part of the volume imaged by the scanner/medical device. Thus, the reconstruction field of view specifies a particular area to be reconstructed/rendered.

At step 242, the identified reconstruction parts are classified/categorized into the first classification. Essentially, this means that any raw medical image data corresponding to the image to be reconstructed within the field of view is compressed in a lossless or weakly lossy manner. As a result, a quality of a resultant reconstructed image within the field of view is preserved.

At step 244, raw medical image data corresponding to an area surrounding the reconstruction parts is classified into the second classification. Essentially, this means that any raw medical image data not corresponding to the image to be reconstructed within the field of view (i.e. corresponding to an area that will not be reconstructed) is compressed in a strongly lossy manner. As a result, an overall compression ratio of the raw medical image data is increased.

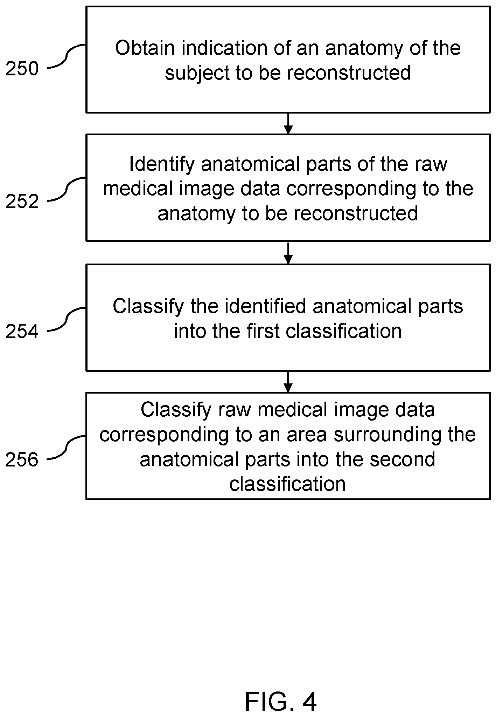

Fig. 4 is a relates to analyzing the raw medical image data in order to identify parts of the raw medial image data corresponding to an anatomical part of the scanned subject that is of interest.

At step 250, an indication of the anatomy of the subject to be reconstructed is obtained. This may be selected by a user/caregiver, or may be automatically selected based on contextual clues (i.e. a centrality of an anatomy). The anatomy may be a structure (or part thereof) of the subject, and may be diagnostically relevant. For example, the anatomy may be a heart, a part of the brain, a vascular system, or any part of the subject that may be scanned/imaged by a scanner/medical device.

At step 252, anatomical parts of the raw medical image data corresponding to the anatomy to be reconstructed are identified. In other words, raw medical image data that may be used/useful in reconstructing an image including the anatomy of interest are identified.

At step 254, the identified anatomical parts are classified/categorized into the first classification. Essentially, this means that any raw medical image data corresponding to the anatomy to be reconstructed within the field of view is compressed in a lossless or weakly lossy manner. As a result, a quality of a resultant reconstructed image containing the anatomy of interest is preserved.

At step 256, raw medical image data corresponding to an area surrounding the anatomical parts is classified into the second classification. Essentially, this means that any raw medical image data not corresponding to the anatomy to be reconstructed (i.e. corresponding to a different anatomy that does not need to be reconstructed) is compressed in a strongly lossy manner. As a result, an overall compression ratio of the raw medical image data is increased.

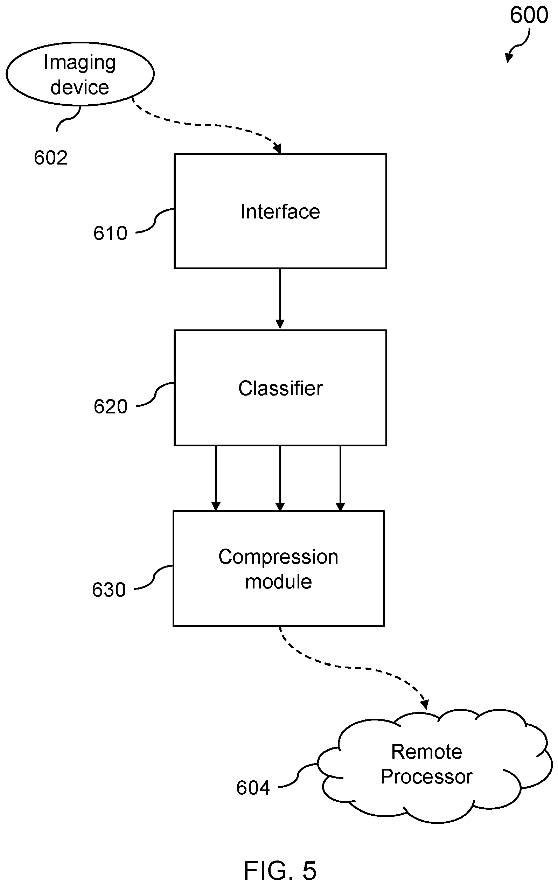

Fig. 5 presents a simplified block diagram of a system 600 for compressing raw medical image data for remote medical image reconstruction of an anatomy of a subject according to an embodiment of the invention. The system comprises an interface 610, a classifier 620, and a compression module 630.

The interface 610 is configured to obtain raw medical image data of a scan of a subject. Said raw medical image data may be acquired directly from an imaging/scanning device 602 as shown, or may be obtained from storage or other memory. The interface 610 may also obtain a specified anatomy of interest and/or a reconstruction request as outlined above in relation to Figs 3 and 4.

The classifier 620 is configured to analyze the raw medical image data to classify each part of the raw medical image data into one of a plurality of classifications. At the very least the classifier 620 categorizes/groups/classifies the raw medial image data into two classifications, a first and second classification. This classification may be performed using any known method suitable for categorizing raw medical image data for suitable subsequent compression, a few methods of which are described above in relation to Figs 2-4.

Subsequently, the classifier 620 may transfer the raw medical image data in the separate classifications to the compression module.

The compression module 630 is configured to process, with a lossless compression algorithm or a weakly-lossy compression algorithm, raw medical image data in a first classification of the plurality of classifications to generate first compressed medical image data.

Further, the compression module 640 is further configured to process, with a strongly-lossy compression algorithm, raw medical image data in a second classification of the plurality of classifications to generate second compressed medical image data.

Finally, the compressed medical image data may be transmitted to a remote processor 604 (i.e. the cloud) for subsequent decompression and reconstruction. Alternatively, the raw medical image data may be stored locally for future transmission and remote reconstruction.

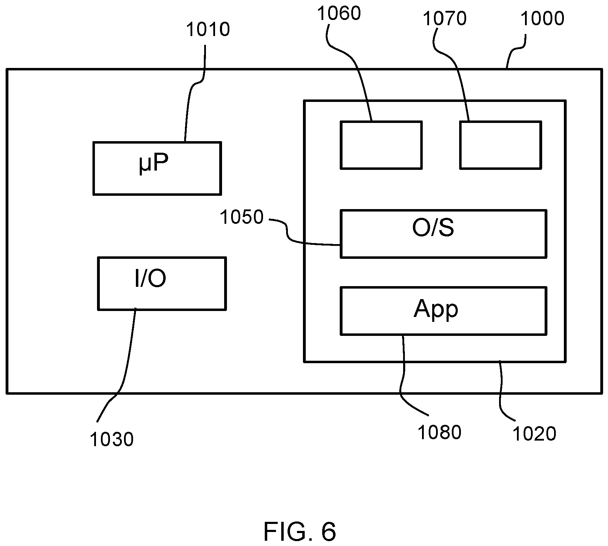

Fig. 6 illustrates an example of a computer 1000 within which one or more parts of an embodiment may be employed. Various operations discussed above may utilize the capabilities of the computer 1000. For example, one or more parts of a system for compressing raw medical image data for remote medical image reconstruction of an anatomy of a subject may be incorporated in any element, module, application, and/or component discussed herein. In this regard, it is to be understood that system functional blocks can run on a single computer or may be distributed over several computers and locations (e.g. connected via internet).

The computer 1000 includes, but is not limited to, PCs, workstations, laptops, PDAs, palm devices, servers, storages, and the like. Generally, in terms of hardware architecture, the computer 1000 may include one or more processors 1010, memory 1020 and one or more I/O devices 1030 that are communicatively coupled via a local interface (not shown). The local interface can be, for example but not limited to, one or more buses or other wired or wireless connections, as is known in the art. The local interface may have additional elements, such as controllers, buffers (caches), drivers, repeaters, and receivers, to enable communications. Further, the local interface may include address, control, and/or data connections to enable appropriate communications among the aforementioned components.

The processor 1010 is a hardware device for executing software that can be stored in the memory 1020. The processor 1010 can be virtually any custom made or commercially available processor, a central processing unit (CPU), a digital signal processor (DSP), or an auxiliary processor among several processors associated with the computer 1000, and the processor 1010 may be a semiconductor-based microprocessor (in the form of a microchip) or a microprocessor.

The memory 1020 can include any one or combination of volatile memory elements (e.g., random access memory (RAM), such as dynamic random access memory (DRAM), static random access memory (SRAM), etc.) and non-volatile memory elements (e.g., ROM, erasable programmable read only memory (EPROM), electronically erasable programmable read only memory (EEPROM), programmable read only memory (PROM), tape, compact disc read only memory (CD-ROM), disk, diskette, cartridge, cassette or the like, etc.). Moreover, the memory 1020 may incorporate electronic, magnetic, optical, and/or other types of storage media. Note that the memory 1020 can have a distributed architecture, where various components are situated remote from one another, but can be accessed by the processor 1010.

The software in the memory 1020 may include one or more separate programs, each of which comprises an ordered listing of executable instructions for implementing logical functions. The software in the memory 1020 includes a suitable operating system (O/S) 1050, compiler 1060, source code 1070, and one or more applications 1080 in accordance with exemplary embodiments. As illustrated, the application 1080 comprises numerous functional components for implementing the features and operations of the exemplary embodiments. The application 1080 of the computer 1000 may represent various applications, computational units, logic, functional units, processes, operations, virtual entities, and/or modules in accordance with exemplary embodiments, but the application 1080 is not meant to be a limitation.

The operating system 1050 controls the execution of other computer programs, and provides scheduling, input-output control, file and data management, memory management, and communication control and related services. It is contemplated by the inventors that the application 1080 for implementing exemplary embodiments may be applicable on all commercially available operating systems.

Application 1080 may be a source program, executable program (object code), script, or any other entity comprising a set of instructions to be performed. When a source program, then the program is usually translated via a compiler (such as the compiler 1060), assembler, interpreter, or the like, which may or may not be included within the memory 1020, so as to operate properly in connection with the O/S 1050. Furthermore, the application 1080 can be written as an object oriented programming language, which has classes of data and methods, or a procedure programming language, which has routines, subroutines, and/or functions, for example but not limited to, C, C++, C#, Pascal, BASIC, API calls, HTML, XHTML, XML, ASP scripts, JavaScript, FORTRAN, COBOL, Perl, Java, ADA, NET, and the like.

The I/O devices 1030 may include input devices such as, for example but not limited to, a mouse, keyboard, scanner, microphone, camera, etc. Furthermore, the I/O devices 1030 may also include output devices, for example but not limited to a printer, display, etc. Finally, the I/O devices 1030 may further include devices that communicate both inputs and outputs, for instance but not limited to, a NIC or modulator/demodulator (for accessing remote devices, other files, devices, systems, or a network), a radio frequency (RF) or other transceiver, a telephonic interface, a bridge, a router, etc. The I/O devices 1030 also include components for communicating over various networks, such as the Internet or intranet.

If the computer 1000 is a PC, workstation, intelligent device or the like, the software in the memory 1020 may further include a basic input output system (BIOS) (omitted for simplicity). The BIOS is a set of essential software routines that initialize and test hardware at start-up, start the O/S 1050, and support the transfer of data among the hardware devices. The BIOS is stored in some type of read-only-memory, such as ROM, PROM, EPROM, EEPROM or the like, so that the BIOS can be executed when the computer 800 is activated.

When the computer 1000 is in operation, the processor 1010 is configured to execute software stored within the memory 1020, to communicate data to and from the memory 1020, and to generally control operations of the computer 1000 pursuant to the software. The application 1080 and the O/S 1050 are read, in whole or in part, by the processor 1010, perhaps buffered within the processor 1010, and then executed.

When the application 1080 is implemented in software it should be noted that the application 1080 can be stored on virtually any computer readable medium for use by or in connection with any computer related system or method. In the context of this document, a computer readable medium may be an electronic, magnetic, optical, or other physical device or means that can contain or store a computer program for use by or in connection with a computer related system or method.

The application 1080 can be embodied in any computer-readable medium for use by or in connection with an instruction execution system, apparatus, or device, such as a computer-based system, processor-containing system, or other system that can fetch the instructions from the instruction execution system, apparatus, or device and execute the instructions. In the context of this document, a "computer-readable medium" can be any means that can store, communicate, propagate, or transport the program for use by or in connection with the instruction execution system, apparatus, or device. The computer readable medium can be, for example but not limited to, an electronic, magnetic, optical, electromagnetic, infrared, or semiconductor system, apparatus, device, or propagation medium.

The methods described in relation to Figs 1, 2, 3 and 4, and the system described in relation to Fig. 5, may be implemented in hardware or software, or a mixture of both (for example, as firmware running on a hardware device). To the extent that an embodiment is implemented partly or wholly in software, the functional steps illustrated in the process flowcharts may be performed by suitably programmed physical computing devices, such as one or more central processing units (CPUs) or graphics processing units (GPUs). Each process - and its individual component steps as illustrated in the flowcharts - may be performed by the same or different computing devices. According to embodiments, a computer-readable storage medium stores a computer program comprising computer program code configured to cause one or more physical computing devices to carry out an encoding or decoding method as described above when the program is run on the one or more physical computing devices.

Storage media may include volatile and non-volatile computer memory such as RAM, PROM, EPROM, and EEPROM, optical discs (like CD, DVD, BD), magnetic storage media (like hard discs and tapes). Various storage media may be fixed within a computing device or may be transportable, such that the one or more programs stored thereon can be loaded into a processor.

To the extent that an embodiment is implemented partly or wholly in hardware, the blocks shown in the block diagram of Fig. 5 may be separate physical components, or logical subdivisions of single physical components, or may be all implemented in an integrated manner in one physical component. The functions of one block shown in the drawings may be divided between multiple components in an implementation, or the functions of multiple blocks shown in the drawings may be combined in single components in an implementation. Hardware components suitable for use in embodiments of the present invention include, but are not limited to, conventional microprocessors, application specific integrated circuits (ASICs), and field-programmable gate arrays (FPGAs). One or more blocks may be implemented as a combination of dedicated hardware to perform some functions and one or more programmed microprocessors and associated circuitry to perform other functions.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. If a computer program is discussed above, it may be stored/distributed on a suitable medium, such as an optical storage medium or a solid-state medium supplied together with or as part of other hardware, but may also be distributed in other forms, such as via the Internet or other wired or wireless telecommunication systems. If the term "adapted to" is used in the claims or description, it is noted the term "adapted to" is intended to be equivalent to the term "configured to". Any reference signs in the claims should not be construed as limiting the scope.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the Figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

## Claims

1. A method of compressing raw medical image data for remote medical image reconstruction of an anatomy of a subject, the method comprising:
obtaining (100) raw medical image data of a scan of the subject;
analyzing (200) the raw medical image data to classify each part of the raw medical image data into one of a plurality of classifications;
processing (300), with a lossless compression algorithm or a weakly-lossy compression algorithm, raw medical image data in a first classification of the plurality of classifications to generate first compressed medical image data; and
processing (400), with a strongly-lossy compression algorithm, raw medical image data in a second classification of the plurality of classifications to generate second compressed medical image data.

2. The method of claim 1, wherein analyzing the raw medical image data comprises:
identifying (210) a part of the raw medical image data that does not contribute toward a reconstruction of the anatomy of the subject; and
classifying (220) the identified part of the raw medical image data into the second classification.

3. The method of claim 2, wherein identifying (210) the part of the raw medical image data that does not contribute toward reconstruction comprises identifying (212) raw medical image data having another similar part within the raw medical image data.

4. The method of claim 3, wherein the scan of the subject is an axial CT scan, a helical CT scan, or a cardiac gating CT scan.

5. The method of any of claims 2-4, wherein identifying (210) the part of the raw medical image data that does not contribute toward reconstruction comprises identifying (214) raw medical image data having a near-zero value.

6. The method of claim 5, wherein the raw medical image data is of a CT scan, and wherein the near-zero value corresponds to a zero-line integral.

7. The method of any of claims 2-6, wherein identifying (210) the part of the raw medical image data that does not contribute toward reconstruction comprises identifying (216) raw medical image data corresponding to an apparatus used to acquire the scan of the subject.

8. The method of claim 7, wherein identifying (216) the raw medical image data corresponding to the apparatus is based on a model representing the apparatus.

9. The method of any of claims 1-8, further comprising obtaining (230) a reconstruction request describing parameters of reconstruction of the raw medical image data, and wherein analyzing the raw medical image data (200) is further based on the reconstruction request.

10. The method of claim 9, wherein the reconstruction request comprises a reconstruction field of view describing a region of the raw medical image data to be reconstructed, and wherein analyzing (200) the raw medical image data comprises:
identifying (240) reconstruction parts of the raw medical image data corresponding to the reconstruction field of view;
classifying (242) the identified reconstruction parts into the first classification; and
classifying (244) raw medical image data corresponding to an area surrounding the reconstruction parts into the second classification.

11. The method of any of claims 1-10, further comprising obtaining (250) an indication of the anatomy of the subject to be reconstructed, and wherein analyzing (200) the raw medical image data comprises:
identifying (252) anatomical parts of the raw medical image data corresponding to the anatomy to be reconstructed;
classifying (254) the identified anatomical parts into the first classification; and
classifying (256) raw medical image data corresponding to an area surrounding the anatomical parts into the second classification.

12. The method of any of claims 1-11, wherein each of the lossless compression algorithm, the weakly-lossy compression algorithm and the strongly-lossy compression algorithm are one of compression algorithms are machine-learning based compression algorithms, and
optionally wherein each of the lossless compression algorithm, the weakly-lossy compression algorithm and the strongly-lossy compression algorithm correspond to the same compression algorithm with different compression rates.

13. The method of any of claims 1-12, further comprising deleting (500) raw medical image data in a third classification of the plurality of classifications.

14. A computer program comprising computer program code means adapted, when said computer program is run on a computer, to implement the method of any of claims 1-13.

15. A system (600) for compressing raw medical image data for remote medical image reconstruction of an anatomy of a subject, the system comprising:
an interface (610) configured to obtain raw medical image data of a scan of a subject;
a classifier (620) configured to analyze the raw medical image data to classify each part of the raw medical image data into one of a plurality of classifications;
a compression module (630) configured to:
process, with a lossless compression algorithm or a weakly-lossy compression algorithm, raw medical image data in a first classification of the plurality of classifications to generate first compressed medical image data; and
process, with a strongly-lossy compression algorithm, raw medical image data in a second classification of the plurality of classifications to generate second compressed medical image data.
